# EUROPEAN PATENT SPECIFICATION

(11) **EP 4 393 849 B1**
(45) Date of publication and mention of the grant of the patent: **08.07.2026**
(21) Application number: 22958958.5
(22) Date of filing: 21.09.2022
(51) Int. Cl.: F26B 5/04, F26B 25/00, F26B 25/06, F26B 9/06

(54) **MATERIAL TRANSPORTATION VEHICLE, CARRYING DEVICE, DRYING SYSTEM AND CONTROL METHOD**
MATERIALTRANSPORTFAHRZEUG, MATERIALTRAGENDES GERÄT, TROCKNUNGSSYSTEM UND STEUERUNGSVERFAHREN
VÉHICULE DE TRANSPORT DE MATÉRIAUX, DISPOSITIF DE TRANSPORT DE MATÉRIAUX, SYSTÈME DE SÉCHAGE ET MÉTHODE DE CONTRÔLE

(43) Date of publication of application: 03.07.2024
(73) Proprietor: Contemporary Amperex Technology (Hong Kong) Limited, Central, Central And Western District (HK)
(72) Inventor: FANG, Yansong, Ningde, Fujian 352100 (CN); WU, Yidong, Ningde, Fujian 352100 (CN); WU, Kun, Ningde, Fujian 352100 (CN)
(74) Representative: Gong, Jinping
(86) International application number: PCT/CN2022/120297
(87) International publication number: WO 2024/060084

(56) References cited:
- EP-A1- 2 128 047
- EP-A1- 3 170 771
- WO-A1-2015/069105
- CN-A- 105 202 882
- CN-A- 114 789 934
- CN-U- 208 149 749
- DE-A1- 102013 013 274
- JP-A- 2011 213 431
- US-A- 4 818 171
- US-A- 5 927 926
- US-A1- 2012 159 803

## Description

### Technical Field

The present application relates to a material transportation vehicle and a control method.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

With the continuous development of the new energy industry, the market has higher and higher requirements for the energy density of batteries. Especially today, when new energy vehicles are becoming more and more popular, batteries not only need to have excellent power performance but also need to have excellent cycle performance to maintain the endurance of the battery. Drying procedures are required during the preparation of traction batteries, which usually comprise drying of positive and negative electrode powders, drying of electrode plates and drying of battery cells. Drying generally takes a long time and involves many manual steps and time. Therefore, how to improve the operating efficiency while ensuring the production quality is of great significance for reducing the battery manufacturing cost. EP 2 128 047 A1 discloses the preamble of independent claim 1 by revealing a pick-up device for a conveyor vehicle and method for its use. EP 3 170 771 A1 discloses an article transfer device configured to move an article along a transfer direction and an article transport facility having such an article transfer device. WO 2015/069105 discloses a device and method for gripping and transporting objects from a storage area and/or for transporting and placing objects in a storage area. US 5 927 926 A discloses a carriage used for a storage-retrieval system. DE 10 2013 013274 A1 discloses a transport robot with lifting device for picking up and unloading transported goods on rack storage locations in rack storage systems.

### Summary of the Invention

The present invention is defined by the independent claims. Advantageous embodiments are described in the dependent claims, the following description and the drawings. The present application is intended to solve at least one of the technical problems existing in the prior art.

The present invention provides a material transportation vehicle, comprising: a carrying base, and a push-pull assembly arranged on the carrying base. The push-pull assembly is configured to drive a material pallet for containing a material to move between a first position and a second position. The second position is a position above the carrying base, and the first position is a position located in the same horizontal plane as the second position and separated from the second position by a preset distance in a first direction.

In the technical solution of the embodiment of the present application, a push-pull assembly capable of driving the movement of the material pallet is arranged on the carrying base, so that the material pallet can be automatically moved into and out of the carrying base, thereby achieving automatic handling of material transportation, improving the production efficiency, and reducing the manufacturing cost.

The push-pull assembly according to the present invention comprises a first push-pull assembly and a second push-pull assembly. The first push-pull assembly is configured to be detachably connected to the material pallet and drive the material pallet to move between the first position and a first transition position. The second push-pull assembly is arranged spaced apart from the first push-pull assembly, and the second push-pull assembly is configured to be detachably connected to the material pallet and drive the material pallet to move between the second position and the first transition position. The first transition position is located between the first position and the second position.

In the technical solution of the embodiments of the present application, by providing the first push-pull assembly and the second push-pull assembly to move the material pallet in a two-stage driving manner, the problem of insufficient stability of a single-stage driving structure can be avoided, and the movement range of the push-pull assembly can be reduced, so that the structural arrangement is more compact and the footprint is reduced.

According to the present invention, the first push-pull assembly further comprises a first push-pull rod, a first linear driving unit and a first rotary driving unit. The first push-pull rod comprises a first rod body and a first engagement portion fixedly connected to the first rod body. The first linear driving unit is in transmission connection with the first rod body to drive the first push-pull rod to move between the first position and the first transition position. The first rotary driving unit is in transmission connection with the first rod body, and the first rotary driving unit drives the first engagement portion to rotate, such that the first engagement portion engages with or disengages from the material pallet. The second push-pull assembly comprises a second push-pull rod, a second linear driving unit and a second rotary driving unit. The second push-pull rod comprises a second rod body and at least one second engagement portion fixedly connected to the second rod body. The second linear driving unit is in transmission connection with the second rod body to drive the second push-pull rod to move between the second position and the first transition position. The second rotary driving unit is in transmission connection with the second rod body, and the second rotary driving unit drives the at least one second engagement portion to rotate, such that the at least one second engagement portion engages with or disengages from the material pallet.

In the technical solution of the embodiments of the present application, the first push-pull assembly and the second push-pull assembly are respectively provided with a first engagement portion and a second engagement portion to engage with or disengage from the material pallet to achieve detachable connection, and in combination with the cooperation of the linear driving units and the rotary driving units, the first push-pull assembly and the second push-pull assembly can respectively engage with the material pallet and then push and pull the material pallet to move, thereby achieving two-stage driving, avoiding damage to the structure due to large stress and deformation caused by excessive distance during single-stage push and pull, and improving the structural stability and the safety of the device.

In an embodiment, the push-pull assembly is further configured to drive the material pallet to move between the second position and a third position. The third position and the second position are located in the same horizontal plane, and the third position and the first position are respectively located on two sides of the second position in the first direction.

In the technical solution of the embodiments of the present application, the push-pull assembly drives the material pallet to move to two sides of the second position, so it is possible to get rid of the restriction of the specific orientation when a station is arranged, to improve the applicable scope and the delivery efficiency of the device, and to improve the operating efficiency of the device.

In a further embodiment, the push-pull assembly comprises a third push-pull assembly arranged on the carrying base and spaced apart from the first push-pull assembly and the second push-pull assembly. The second push-pull assembly is further configured to drive the material pallet to move between the second position and a second transition position. The third push-pull assembly is further configured to drive the material pallet to move between the second transition position and the third position. The second transition position is between the second position and the third position.

In the technical solution of the embodiments of the present application, the bidirectional movement of the material pallet is achieved by providing the third push-pull assembly, so that the second push-pull assembly can cooperate with the first push-pull assembly and the third push-pull assembly respectively such that the material pallet can be moved in a two-stage driving manner on two sides, thereby avoiding redundancy in structural design, improving the utilization rate of the device, and improving the operating efficiency.

In another embodiment, the third push-pull assembly comprises a third push-pull rod, a third linear driving unit and a third rotary driving unit. The third push-pull rod comprises a third rod body and a third engagement portion fixedly connected to the third rod body. The third linear driving unit is in transmission connection with the third rod body, and the third linear driving unit is configured to drive the third push-pull rod to move between the third position and the second transition position. The third rotary driving unit is in transmission connection with the third rod body, and the third rotary driving unit is configured to drive the third engagement portion to rotate, such that the third engagement portion engages with or disengages from the material pallet.

In the technical solution of the embodiments of the present application, the structure of the third push-pull assembly being consistent with that of the first push-pull assembly and that of the second push-pull assembly can simplify the types of parts and facilitate subsequent maintenance, while maintaining the consistency of the movement structures on two sides, thereby avoiding the imbalance caused by a large difference in stress between the driving structures on the two sides.

In an embodiment, the first position and the third position are mirror symmetrical with respect to the second position, and the first transition position and the second transition position are mirror symmetrical with respect to the second position.

In the technical solution of the embodiments of the present application, specifically arranging the first position and the third position, and the first transition position and the second transition position to be mirror symmetrical can more easily achieve positioning when moving between different sides, simplify the control logic of the driving units, and reduce the failure rate.

In an embodiment, the material transportation vehicle further comprises: a positioning member fixedly connected to the carrying base. The positioning member is configured to abut against the material pallet or a material contained on the material pallet in response to the material pallet being in the second position.

In the technical solution of the embodiments of the present application, by providing the positioning member to limit the material pallet or the material on the material pallet, the stability during transportation can be ensured and overturning can be avoided. Moreover, the positioning function of the positioning member can also be used to determine whether the position of the material pallet is in place. If the position of the material pallet is somewhat offset from the second position, the positioning member will send out an alarm signal because it cannot reach a preset positioning position, and then the position of the material pallet can be adjusted to avoid accidents during the transportation and ensure the transportation safety.

Another embodiment of the present invention provides a material carrying device, comprising: a material pallet configured to contain a material, a conveying track, and a material transportation vehicle according to the above embodiments, wherein the material transportation vehicle drives the material pallet to move into or out of the carrying base of the material transportation vehicle, and delivers the material pallet along the conveying track.

In the technical solution of the embodiments of the present application, through the cooperation of the material transportation vehicle and the conveying track, long-distance transportation can be achieved, so that the transportation vehicle in the material carrying device can achieve the transfer of the material between different positions. Combined with processing apparatuses for different procedures, the automatic loading, unloading and transportation of the material in different processing procedures can be achieved to improve the operating efficiency for production.

In an embodiment, an upper surface of the carrying base is further provided with at least one first guide member extending in the first direction, and a bottom portion of the material pallet is provided with at least one second guide member corresponding to the at least one first guide member. The first direction is perpendicular to an extension direction of the conveying track.

In the technical solution of the embodiments of the present application, the corresponding arrangement of the first guide member and the second guide member can provide a guidance for the material pallet during moving, to avoid deviation. Still further, the first guide member and the second guide member can also provide support in the vertical direction, so as to, when the material pallet moves, prevent all or part of the gravity from acting on the push-pull assembly, which causes the push-pull assembly to be deformed and damaged due to excessive force, thereby improving the structural reliability and stability of the device. Setting the first direction perpendicular to the extension direction of the conveying track facilitates the arrangement of the moving space of the material pallet to avoid interference with other apparatuses, and also facilitates the control over the moving strokes of the loading and unloading of the material.

In a further embodiment, the bottom portion of the material pallet is additionally provided with an engagement block, and the engagement block cooperates with the push-pull assembly to achieve a detachable connection between the material pallet and the material transportation vehicle.

In the technical solution of the embodiments of the present application, the detachable connection between the material pallet and the material transportation vehicle is achieved in an engagement manner by providing the engagement block which cooperates with the push-pull assembly, so that the push-pull assembly can drive the material pallet through mutually independent multi-stage push-pull movements, to avoid excessive load caused by a too long push-pull stroke.

In a further embodiment, the material carrying device further comprises a driving device configured to drive the material transportation vehicle to move along the conveying track.

In the technical solution of the embodiments of the present application, the autonomous movement of the material transportation vehicle can be achieved by means of the driving device, thereby achieving the automatic transportation of the material, and improving the transfer efficiency of the material between different procedures.

Another embodiment of the present invention provides a material drying system, comprising a material carrying device according to some of the above embodiments, and a drying device located on a side of the conveying track in the material carrying device. The material carrying device is configured to move the material pallet into or out of a drying station in the drying device.

In the technical solution of the embodiments of the present application, by arranging the drying device on the side of the conveying track of the material carrying device, automatic feeding and automatic discharging during drying operation can be achieved; thereby avoiding manual participation and improving the operating efficiency and the safety.

In a further embodiment, the drying device is configured as a plurality of vacuum drying furnaces arranged on one side or two sides of the conveying track.

In the technical solution of the embodiments of the present application, the provision of the plurality of vacuum drying furnaces can make full use of the efficient conveying capability of the material carrying device. The vacuum drying furnaces are arranged on two sides of the conveying track and the material carrying device can drive the material pallet to the two sides, so that the station layout of the conveying system is facilitated, the compactness of the material drying system is improved, the footprint is reduced, and the operating efficiency of the material drying process is improved, thereby improving the production efficiency and reducing the manufacturing cost.

In another embodiment, the material drying system further comprises a loading device and an unloading device. The loading device is located at one end of the conveying track and is configured to place a material in a stacked manner on the material pallet in a loading position. The unloading device is located at the other end of the conveying track, the unloading device being configured to take the material away from the material pallet in an unloading position.

In the technical solution of the embodiments of the present application, by providing the loading device and the unloading device respectively at two ends of the conveying track, the automatic operations of loading and unloading are achieved, forming a fully automated operation process, shortening the conversion time between different procedures, and improving the production efficiency.

The present invention further provides a method for controlling a material drying system according to the above embodiments, the control method comprising:
step S401: moving the material transportation vehicle such that the first position or the third position coincides with the loading position;
step S402: moving the material pallet from the loading position to the second position;
step S403: moving the material transportation vehicle to the front of the drying device such that the first position or the third position coincides with the drying station; and
step S404: moving the material pallet from the second position to the drying station.

In the technical solution of the embodiment of the present application, the material is automatically moved from the loading position to a drying position by means of the material transportation vehicle, achieving the automatic processing of the feeding operation for drying, avoiding manual participation which causes excessive time consumption, and improving the production efficiency.

In another embodiment, the method for controlling a material drying system further comprises:
step S501: moving the material transportation vehicle to the front of the drying device such that the first position or the third position coincides with the drying station; and
step S502: moving the material pallet from the drying station to the second position;
step S503: moving the material transportation vehicle such that the first position or the third position coincides with the unloading position; and
step S504: moving the material pallet from the second position to the unloading position.

In the technical solution of the embodiments of the present application, the automatic discharging process after drying is achieved by means of the material carrying device, improving the automation degree and transfer speed of material transfer, and improving the production efficiency.

In a further embodiment, , the engagement connection between the push-pull assembly and the material pallet is maintained in response to the material pallet being in the second position.

In the technical solution of the embodiments of the present application, the engagement connection structure between the push-pull assembly and the material pallet can provide a good limiting effect when the material pallet is transported, preventing the material pallet from turning over, and ensuring the smooth and safe transportation.

In another embodiment, the positioning member on the carrying base is driven to abut against the material pallet or the material contained on the material pallet in response to the material pallet being in the second position.

In the technical solution of the embodiments of the present application, the positioning member can provide position determination and movement limit functions for the material pallet. Through position determination, it is possible to ensure that the material pallet does not shift or is adjusted in a timely manner after the shift occurs, avoiding apparatus failure caused by overturning during transportation. Moreover, during the transportation, the positioning member can provide contact abutment and limit in the extension direction of the conveying track. This, together with the limit of the push-pull assembly, can achieve limit in two directions in the horizontal plane, better ensuring the stability of transportation.

In a non-claimed aspect, the present disclosure provides an electronic apparatus, comprising: at least one processor; and a memory communicatively connected to the at least one processor. The memory stores instructions executable by the at least one processor, and the instructions, when executed by the at least one processor, cause the at least one processor to perform a method for controlling a material drying system in the above embodiments.

In a non-claimed aspect, the present disclosure provides a computer-readable storage medium, storing a computer program. When the computer program is executed by a processor, a method for controlling a material drying system in the above embodiments is implemented.

In a non-claimed aspect, the present disclosure further provides a computer program product, comprising a computer program. When the computer program is executed by a processor, a method for controlling a material drying system in the above embodiments is implemented.

The above description is only an overview of the technical solutions of the present application. In order to more clearly understand the technical means of the present application to implement same according to the contents of the description, and in order to make the above and other objectives, features and advantages of the present application more obvious and understandable, detailed description of embodiments of the present application is exemplarily described below.

### Brief Description of the Drawings

In the drawings, the same reference signs denote the same or similar components or elements throughout multiple drawings, unless otherwise specified. The drawings are not necessarily drawn to scale. It should be understood that these drawings depict only some implementations according to the present application and should not be construed as limiting the scope of the present application.
FIG. 1 is a schematic diagram of the working of a material transportation vehicle provided in some embodiments of the present application;
FIG. 2 is a schematic diagram of the working of a material transportation vehicle provided in some other embodiments of the present application;
FIG. 3 is a schematic structural diagram of a material transportation vehicle according to some embodiments of the present application;
FIG. 4 is a side view of a material transportation vehicle according to some embodiments of the present application;
FIG. 5 is a structural layout diagram of a material carrying device according to some embodiments of the present application;
FIG. 6 is a bottom view of a material pallet according to some embodiments of the present application;
FIG. 7 is a structural layout diagram of a material drying system according to some embodiments of the present application;
FIG. 8 is a flowchart of a method for controlling a material drying system according to some embodiments of the present application; and
FIG. 9 is a flowchart of a control method of a material drying system according to some other embodiments of the present application.

Description of reference signs:
material transportation vehicle 100, carrying base 101, push-pull assembly 102, material pallet 103, engagement block 1031, first engagement block group 1032, second engagement block group 1033, third engagement block group 1034, first push-pull assembly 104, first push-pull rod 1041, first linear driving unit 1042, first rotary driving unit 1043, first rod body 1044, first engagement portion 1045, second push-pull assembly 105, second push-pull rod 1051, second linear driving unit 1052, second rotary driving unit 1053, second rod body 1054, second engagement portion 1055, third push-pull assembly 106, third push-pull rod 1061, third linear driving unit 1062, third rotary driving unit 1063, third rod body 1064, third engagement portion 1065, positioning member 107, first position 110, first transition position 111, second position 120, second transition position 121, third position 130, material 140, first guide member 150, second guide member 160;
material carrying device 200, conveying track 201, driving device 202;
material drying system 300, drying device 301, first vacuum drying furnace 302, second vacuum drying furnace 303, third vacuum drying furnace 304, loading device 305, unloading device 306, loading position 310, first drying position 320, second drying position 330, unloading position 340.

### Detailed Description of Embodiments

Embodiments of the technical solutions of the present application will be described in detail below with reference to the accompanying drawings. The following embodiments are merely intended to more clearly illustrate the technical solutions of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a specific orientation or be constructed and operated in a described orientation, and therefore cannot be construed as limiting the embodiments of the present application.

In the description of the embodiments of the present application, unless otherwise explicitly specified and defined, the technical terms such as "mounting", "connecting", "connection", and "fixing" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

The applicant has noticed that as the demand for batteries increases rapidly, the manufacturing capacity of batteries also expands rapidly, and the speed requirements for parts to operate in each procedure are getting higher and higher, thereby putting forward higher automation requirements for the existing production lines and apparatuses.

In order to improve the operating efficiency for production and manufacturing, the applicant has found that a set of automation devices can be designed to perform automatic transportation and loading and unloading operations on materials, to achieve automated operations in the battery manufacturing process, and reduce manual participation, thereby improving the production efficiency and reducing the manufacturing cost.

In addition, when a traction battery is in use, moisture will react with an electrolyte during the charging and discharging processes, so that the internal resistance of the battery is increased, and the capacity of the battery, its number of cycles and the electrical performance are reduced, seriously affecting the service life of the battery. Moreover, there are also safety hazards such as explosions. Therefore, moisture content is one of the important factors affecting the quality and performance of traction batteries, and an important means for controlling moisture is the use of a drying procedure. The current drying procedure is still in a semi-automated state, is complex to operate, has many manual participation steps, and takes too long time, significantly hindering the production efficiency and the manufacturing cost.

Based on the above considerations, in order to solve the problem of low operating efficiency in the battery production process, the applicant has designed a material transportation vehicle after in-depth research, in which a push-pull assembly is arranged on a carrying base to drive a material pallet containing a material to move, so as to implement automatic loading and automatic unloading, so that automatic operations can be achieved during transportation and transfer of the material, improving the production efficiency and reducing the manufacturing cost.

The material transportation vehicle disclosed in the embodiments of the present application may be, but not limited to, a rail guided vehicle (RGV), a transport robot, etc. The material transportation vehicle may be used for, but not limited to, transportation and drying operations of battery cells, battery electrode plates, and battery modules. The material transportation vehicle disclosed in the present application may be used to form a material carrying device, a material drying system, and a method for controlling a material drying system, etc. This helps to reduce the transportation time, improve the battery production efficiency, and reduce the manufacturing cost.

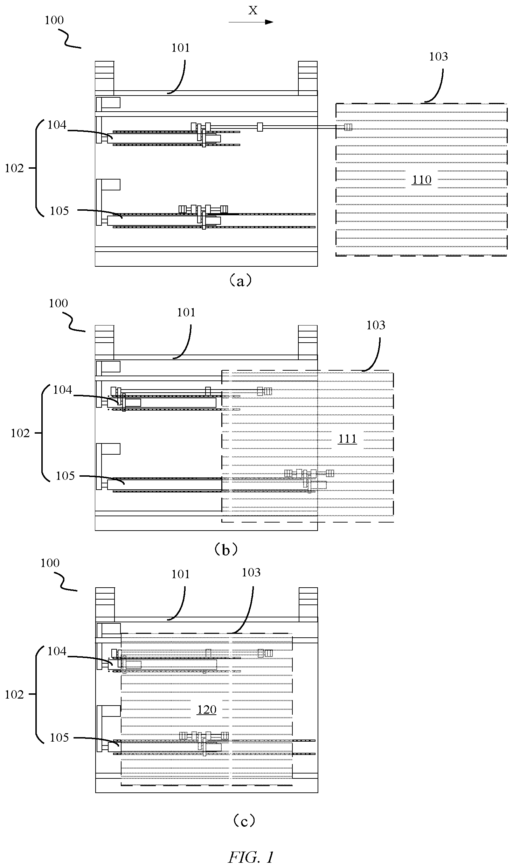

Referring to FIG. 1, FIG. 1 is a schematic diagram of the working of a material transportation vehicle provided in some embodiments of the present application. FIG. 1(a) shows a material pallet in a first position, FIG. 1(b) shows the material pallet in a first transition position, and FIG. 1(c) shows the material pallet in a second position.

According to some embodiments of the present application, the material transportation vehicle 100 comprises a carrying base 101 and a push-pull assembly 102 arranged on the carrying base. The push-pull assembly 102 is configured to drive the material pallet 103 to move between a first position 110 and a second position 120. The second position 120 is located above the carrying base 101, and the first position 110 is located in the same horizontal plane as the second position 120 and separated from the second position 120 by a preset distance in a first direction X.

Illustratively, the material pallet 103 may be configured to contain a material. The material may be a workpiece or module to be transported or processed, such as a battery cell. The material pallet 103 may contain a plurality of workpieces or modules at the same time. The plurality of workpieces or modules may be placed in a suitable manner and arranged according to the placement requirements during machining or processing. For example, the plurality of battery cells may be stacked on the material pallet 103. The second position 120 may be a position directly above the carrying base 101. The first position 110 is a position in the same horizontal plane as the second position 120 and separated by a preset distance in the first direction X. It can be understood that, as shown in FIG. 1, the first position 110 is a position that is staggered and separated by a certain distance from the second position 120 in the first direction X, and is located outside the material transportation vehicle 100. When the material transportation vehicle 100 moves, the absolute spatial positions of the first position 110 and the second position 120 will also change accordingly. Moreover, the preset distance between the first position 110 and the second position 120 may also be set based on the actual usage scenario, so that driving the material pallet 103 to move between the first position 110 and the second position 120 can realize the movement of the material pallet 103 into and out of the carrying base 101 of the material transportation vehicle 100. The first direction X may be set according to the requirements of the specific movement direction.

In this embodiment, a push-pull assembly 102 capable of driving the movement of the material pallet 103 is arranged on the carrying base 101, so that the material pallet 103 can automatically move into and out of the carrying base 101, thereby achieving automatic handling of material transportation without manual participation, improving the production efficiency, and reducing the manufacturing cost.

According to some embodiments of the present application, as shown in FIG. 1, the push-pull assembly 102 comprises a first push-pull assembly 104 and a second push-pull assembly 105 arranged spaced apart from each other. The first push-pull assembly 104 is configured to be detachably connected to the material pallet 103 and drive the material pallet 103 to move between the first position 110 and a first transition position 111. The second push-pull assembly 105 is configured to be detachably connected to the material pallet 103 and drive the material pallet 103 to move between the second position 120 and the first transition position 111. The first transition position 111 is located between the first position 110 and the second position 120.

It can be understood that, as shown in FIG. 1, the first transition position 111, the first position 110 and the second position 120 are positions located in the same horizontal plane and staggered in the same direction, for example, arranged in sequence in the first direction X. The push-pull assembly 102 drives the material pallet 103 to move from the first position 110 to the second position 120 in two steps. The first step is for the first push-pull assembly 104 to drive the material pallet 103 to move from the first position 110 to the first transition position 111, and then the second push-pull assembly 105 drives the material pallet 103 to move from the first transition position 111 to the second position 120, that is, above the carrying base 101, so as to complete the process of moving the material pallet 103 into the carrying base 101. Conversely, the process of moving the material pallet 103 out of the carrying base 101 is to move the material pallet from the second position 120 to the first transition position 111, and then move the material pallet from the first transition position 111 to the first position 110, so as to completely separate the material pallet 103 from the material transportation vehicle 100.

In the embodiments of the present application, by providing the first push-pull assembly 104 and the second push-pull assembly 105 to move the material pallet 103 in a two-stage driving manner, the problem of insufficient stability of a single-stage driving structure can be avoided, and the movement range of the push-pull assembly can be reduced, so that the structural stress is more reasonable.

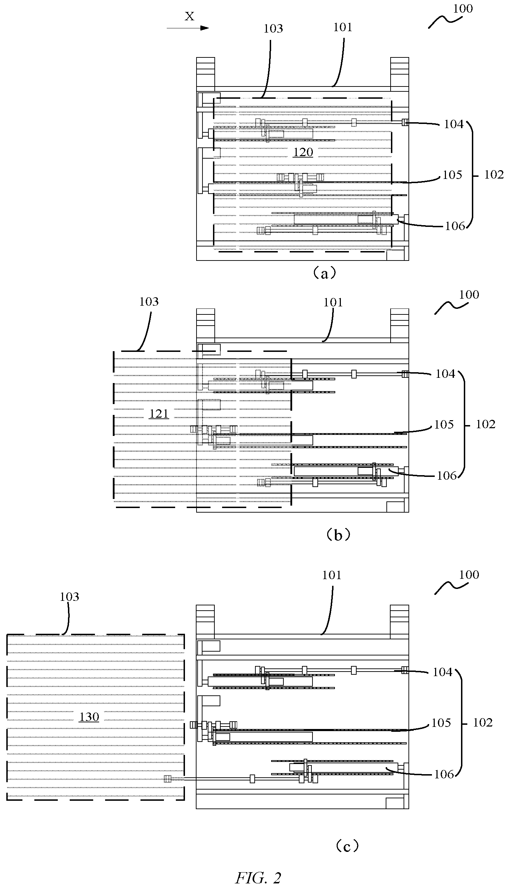

FIGS. 2(a)-(c) show schematic diagrams of the movement process of a material transportation vehicle driving a material pallet provided in some other embodiments of the present application. FIG. 2(a) shows the material pallet in the second position, FIG. 2(b) shows the material pallet in the second transition position, and FIG. 2(c) shows the material pallet in a third position.

In some embodiments, as shown in FIG. 2, the push-pull assembly 102 is further configured to drive the material pallet 103 to move between the second position 120 and the third position 130. The third position 130 and the second position 120 are located in the same horizontal plane, and the third position and the first position 110 are respectively located on two sides of the second position 120 in the first direction X.

It can be understood that the material pallet 103 may be driven by the push-pull assembly 102 to move to two sides in the same direction or in opposite directions with respect to the first direction X, so that on either side of the carrying base 101 in the first direction X, the material pallet 103 can be moved in and out. That is, the material pallet may be moved in and out on the same side, or may be moved in on one side and out on the other side.

In the technical solution of the embodiments of the present application, the push-pull assembly 102 drives the material pallet 103 to move to two sides of the second position 120, so it is possible to get rid of the restriction of the specific orientation when a station is arranged, and to improve the applicable scope and the delivery efficiency of the device. In particular, based on the two-stage push-pull mode shown in the embodiments of the present application, the stress problem caused by an excessively long single-stage push-pull stroke can be well avoided. When moving in two directions, the push-pull stroke of each stage does not need to deviate too far from the carrying base, so there is no need to change the track configuration and the structural layout, but only need to make simple adjustments to the driving unit. This will not be constrained by the structural layout, the application scenarios can be expanded, and the operating efficiency of the device can be improved.

In some embodiments, as shown in FIG. 2, the first push-pull assembly 104 comprises a first push-pull rod 1041, a first linear driving unit 1042 and a first rotary driving unit 1043. The first push-pull rod 1041 comprises a first rod body 1044 and a first engagement portion 1045 fixedly connected to the first rod body 1044. The first linear driving unit 1042 is in transmission connection with the first rod body 1044 to drive the first push-pull rod 1041 to move between the first position 110 and the first transition position 111. The first rotary driving unit 1043 is in transmission connection with the first rod body 1044, and the first rotary driving unit 1043 drives the first engagement portion 1045 to rotate, such that the first engagement portion 1045 engages with or disengages from the material pallet 103.

The second push-pull assembly 105 comprises a second push-pull rod 1051, a second linear driving unit 1052 and a second rotary driving unit 1053. The second push-pull rod 1051 comprises a second rod body 1054 and at least one second engagement portion 1055 fixedly connected to the second rod body 1054. The second linear driving unit 1052 is in transmission connection with the second rod body 1054 to drive the second push-pull rod 1051 to move between the second position 120 and the first transition position 111. The second rotary driving unit 1053 is in transmission connection with the second rod body 1054, and the second rotary driving unit 1053 drives the at least one second engagement portion 1055 to rotate, such that the at least one second engagement portion 1055 engages with or disengages from the material pallet 103.

In an example, as shown in FIG. 2, the first push-pull rod 1041 moves linearly in the first direction X under the driving of the first linear driving unit 1042. After reaching a designated position, the first push-pull rod 1041 is driven by the first rotary driving unit 1043 to rotate, such that the first engagement portion 1045 engages with or disengages from the material pallet 103 through rotation, thereby achieving the detachable connection. Similarly, the second push-pull rod 1051 also works on the same principle. The first linear driving unit 1042 and the second linear driving unit 1052 may be an electric motor and lead screw drive, or may be a telescopic cylinder drive. The first linear driving unit 1042 and the second linear driving unit 1052 may be the same or different. The first rotary driving unit 1043 and the second rotary driving unit 1053 may be an electric motor that transmits rotation through a belt or an electric motor that transmits rotation through gears. The first rotary driving unit 1043 and the second rotary driving unit 1053 may be the same or different.

In the technical solution of the embodiments of the present application, the first push-pull assembly 104 and the second push-pull assembly 105 are respectively provided with the first engagement portion 1045 and the second engagement portion 1055 to engage with or disengage from the material pallet 103 to achieve detachable connection, and in combination with the cooperation of the linear driving units and the rotary driving units, the first push-pull assembly 104 and the second push-pull assembly 105 can respectively engage with the material pallet 103 and then push and pull the material pallet to move, thereby achieving two-stage driving, reducing the driving stroke of each stage, avoiding damage to the structure due to large stress and deformation caused by excessive distance during single-stage push and pull, and improving the structural stability and the safety of the device.

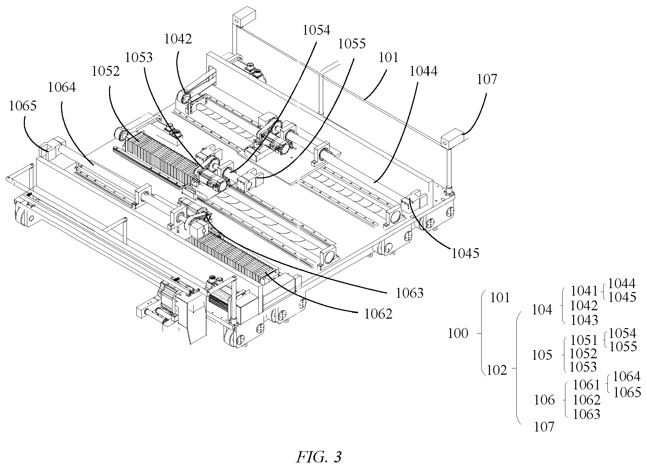

In some embodiments, as shown in FIGS. 2 and 3, the push-pull assembly 102 further comprises a third push-pull assembly 106. The third push-pull assembly 106 is arranged on the carrying base 101 and spaced apart from the first push-pull assembly 104 and the second push-pull assembly 105. The second push-pull assembly 105 is further configured to drive the material pallet 103 to move between the second position 120 and a second transition position 121. The third push-pull assembly 106 is further configured to drive the material pallet 103 to move between the second transition position 121 and the third position 120. The second transition position 121 is located between the second position 120 and the third position 130.

In the technical solution of the embodiments of the present application, the bidirectional movement of the material pallet 103 is achieved by providing the third push-pull assembly 106, so that the second push-pull assembly 105 can cooperate with the first push-pull assembly 104 and the third push-pull assembly 106 respectively such that the material pallet 103 can be moved in a two-stage driving manner on two sides, thereby improving the utilization efficiency of the second push-pull assembly 105, avoiding redundancy in structural design, improving the utilization rate of the device, and improving the operating efficiency.

In some embodiments, as shown in FIG. 3, the third push-pull assembly 106 comprises a third push-pull rod 1061, a third linear driving unit 1062 and a third rotary driving unit 1063. The third push-pull rod 1061 comprises a third rod body 1064 and a third engagement portion 1065 fixedly connected to the third rod body 1064. The third linear driving unit 1062 is in transmission connection with the third rod body 1064, and the third linear driving unit 1062 is configured to drive the third push-pull rod 1061 to move between the third position 130 and the second transition position 121. The third rotary driving unit 1063 is in transmission connection with the third rod body 1064, and the third rotary driving unit 1063 is configured to drive the third engagement portion 1065 to rotate, such that the third engagement portion 1065 engages with or disengages from the material pallet 103.

In an example, the third engagement portion 1065 may have the same size as the first engagement portion 1045 and the second engagement portion structure 1055. The third linear driving unit 1062 and the third rotary driving unit 1063 may also be respectively configured to be consistent with the first linear driving unit 1042 and the second linear driving unit 1052, and the first rotary drive 1043 and the second rotary driving unit 1053, to improve the consistency of parts and facilitate subsequent maintenance.

In the technical solution of the embodiments of the present application, the structure of the third push-pull assembly 106 being consistent with that of the first push-pull assembly 104 and that of the second push-pull assembly 105 can simplify the types of parts and facilitate subsequent maintenance, while maintaining the consistency of the movement structures on two sides, thereby avoiding the imbalance caused by a large difference in stress between the driving structures on the two sides.

In some embodiments, the first position 110 and the third position 130 are mirror symmetrical with respect to the second position 120, and the first transition position 111 and the second transition position 121 are mirror symmetrical with respect to the second position 120.

In the technical solution of the embodiments of the present application, specifically arranging the first position 110 and the third position 130, and the first transition position 111 and the second transition position 121 to be mirror symmetrical can more easily achieve positioning when moving between different sides, simplify the control logic of the driving units, and reduce the failure rate.

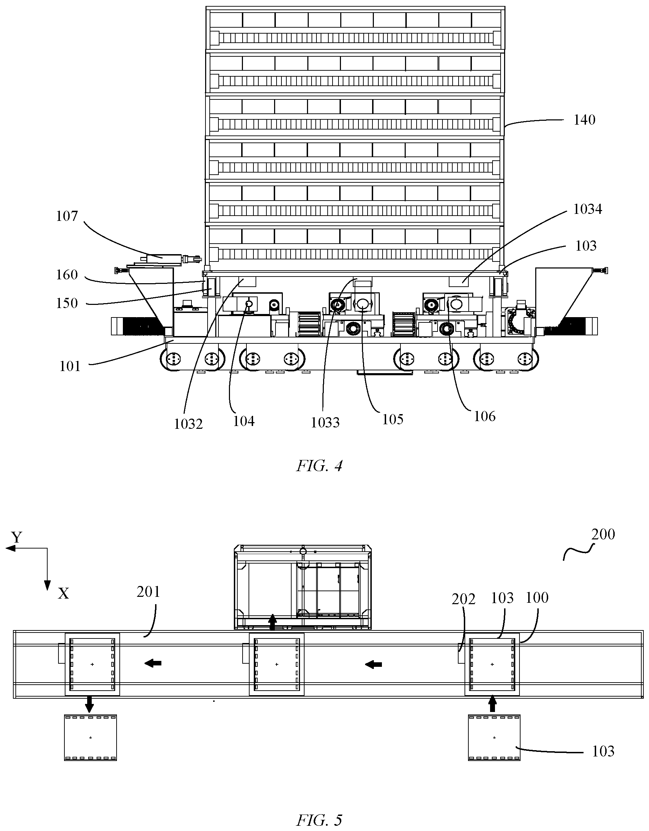

In some embodiments, as shown in FIG. 4, the material transportation vehicle 100 further comprises a positioning member 107 fixedly connected to the carrying base 101 and configured to abut against the material pallet 103 or a material 140 contained on the material pallet 103 in response to the material pallet 103 being in the second position 120.

In an example, the positioning member 107 may be a positioning cylinder. After the material pallet 103 is moved into the carrying base 101, a piston rod of the positioning cylinder is driven to move and abut against the material pallet for positioning. For example, the arrangement direction of the positioning member 107 may be different from the first direction X to provide limit in a different direction, for example, perpendicular to the first direction. It can be understood that materials contained on the material pallet 103 may be placed in a stacked manner, such as stacked battery cells.

In the technical solution of the embodiments of the present application, by providing the positioning member 107 to limit the material pallet 103 or the material on the material pallet 103, the stability during transportation can be ensured and overturning can be avoided. Moreover, the positioning function of the positioning member 107 can also be used to determine whether the position of the material pallet 103 is in place. If the position of the material pallet 103 is somewhat offset from the second position 120, the positioning member 107 will send out an alarm signal because it cannot reach a preset positioning position, to remind an operator to adjust the position of the material pallet to avoid accidents during the transportation and ensure the transportation safety.

In a second aspect, an embodiment of the present application provides a material carrying device. As shown in FIG. 5, the material carrying device 200 comprises: a material pallet 103 configured to contain a material, a conveying track 201, and a material transportation vehicle 100. The material transportation vehicle 100 may be the material transportation vehicle in any of the above embodiments.

In an example, the material transportation vehicle 100 may be an RGV, and the conveying track 201 may be an RGV track. The material carrying device 200 may cooperate with any processing apparatus to achieve automatic operation of one or more processing procedures of the material. Specifically, the material carrying device 200 transports the material pallet 103 containing the material from a loading place to the processing apparatus for processing. After the processing procedure is completed, the material pallet 103 containing the material is moved from the processing apparatus to a discharging place. The processing apparatus includes a vacuum drying furnace, a reaction furnace, etc.

In the technical solution of the embodiments of the present application, through the cooperation of the material transportation vehicle 100 and the conveying track 201, long-distance transportation can be achieved, so that the transportation vehicle in the material carrying device 200 can achieve the transfer of the material between different positions. Combined with processing apparatuses for different procedures, the automatic loading, unloading and transportation of the material in different processing procedures can be achieved to improve the operating efficiency for production.

In some embodiments, as shown in FIGS. 4-5, an upper surface of the carrying base 101 is provided with at least one first guide member 150 extending in the first direction X, and a bottom portion of the material pallet 103 is provided with at least one second guide member 160 corresponding to the at least one first guide member 150. The first direction X is perpendicular to an extension direction Y of the conveying track 201.

It can be understood that the first direction X and the extension direction Y of the conveying track 201 are located in the same horizontal plane and are perpendicular to each other. The first direction X is the arrangement direction of the first position 110, the second position 120 and the third position 130, and is also the movement direction of the material pallet 103. In an example, as shown in FIG. 4, the first guide member 150 may be a slide rail, and the corresponding second guide member 160 may be a slide groove to cooperate with the slide rail to provide guidance and limit for the movement of the material pallet 103. In some other embodiments, the first guide member 150 may alternatively be a slide groove, and the corresponding second guide member 160 may be a slide rail or a pulley. The number of first guide members 150 and the number of second guide members 160 may be two, or may be one or three or more.

In the technical solution of the embodiments of the present application, the corresponding arrangement of the first guide member 150 and the second guide member 160 can provide a guidance for the material pallet 103 during moving, to avoid deviation. Still further, the first guide member 150 and the second guide member 160 can also provide support in the vertical direction, so as to, when the material pallet 103 moves, prevent all or part of the gravity from acting on the push-pull assembly, which causes the push-pull assembly to be deformed and damaged due to excessive force, thereby improving the structural reliability and stability of the device. Setting the first direction X perpendicular to the extension direction Y of the conveying track facilitates the arrangement of the moving space of the material pallet 103 to avoid interference with other apparatuses, and also facilitates the control over the moving strokes of the loading and unloading of the material.

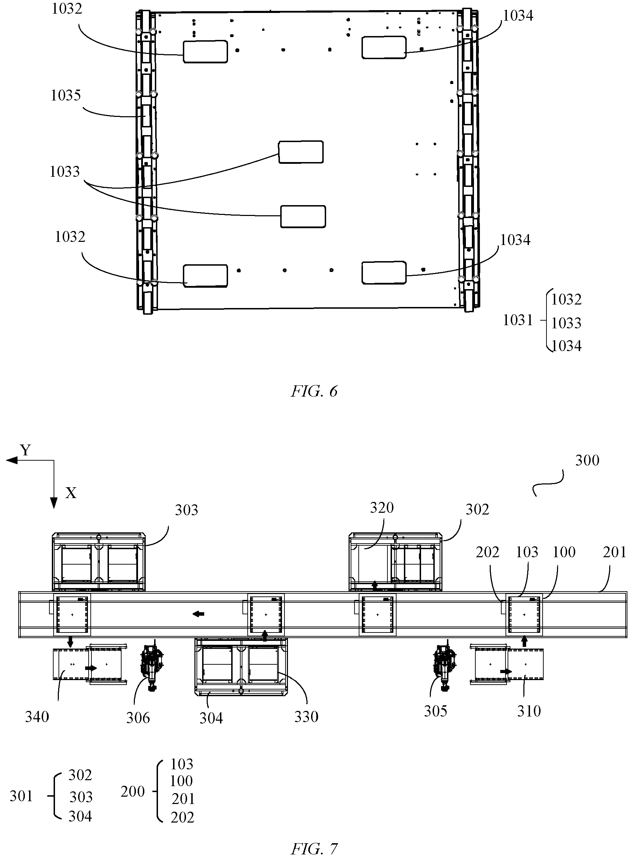

In some embodiments, as shown in FIG. 6, the bottom portion of the material pallet 103 is provided with an engagement block 1031, and the engagement block 1031 cooperates with the push-pull assembly 102 to achieve a detachable connection between the material pallet 103 and the material transportation vehicle 100.

Illustratively, the engagement block 1031 may be a bump extending outwardly along a bottom surface of the material pallet, and there may be a plurality of engagement blocks. As shown in FIG. 6, the engagement blocks 1031 comprise a first engagement block group 1032 which cooperates with the first engagement portion 1045, a second engagement block group 1033 which cooperates with the second engagement portion 1055, and a third engagement block group 1034 which cooperates with the third engagement portion 1065. There may be one or more engagement blocks in the first engagement block group 1032, the second engagement block group 1033 and the third engagement block group 1034.

It can be understood that the engagement blocks 1031 cooperate with the first engagement portion 1045, the second engagement portion 1055 and the third engagement portion 1065 in the push-pull assembly 102. The first engagement portion 1045, the second engagement portion 1055 and the third engagement portion 1065 may be provided with engagement grooves that are adapted to the size of the engagement blocks 1031, so as to achieve the detachable connection between the material pallet 103 and the material transportation vehicle 100.

In the technical solution of the embodiments of the present application, the detachable connection between the material pallet 103 and the material transportation vehicle 100 is achieved in an engagement manner by providing the engagement block 1031 which cooperates with the push-pull assembly 102, so that the push-pull assembly 102 can drive the material pallet through mutually independent multi-stage push-pull movements, to avoid excessive load caused by a too long push-pull stroke.

In some embodiments, the material carrying device 200 further comprises a driving device 202. The driving device 202 is configured to drive the material transportation vehicle 100 to move along the conveying track 201. As shown in FIG. 4, the driving device 202 is arranged at one end of the carrying base of the material transportation vehicle 100.

It can be understood that the driving device 202 can be arranged either on the material transportation vehicle 100, or at one end of the conveying track 201, and is in transmission connection with the material transportation vehicle 100 via a transmission structure.

In the technical solution of the embodiments of the present application, the autonomous movement of the material transportation vehicle can be achieved by means of the driving device 202, thereby achieving the automatic transportation of the material, and improving the transfer efficiency of the material between different procedures.

In a third aspect, an embodiment of the present application provides a material drying system. As shown in FIG. 7, the material drying system 300 comprises a material carrying device 200, and a drying device 301 located on a side of a conveying track 201 in the material carrying device 200. The material carrying device 200 is configured to move the material pallet 103 into or out of a drying station in the drying device 301. The material carrying device 200 is the material carrying device in the above embodiments.

In an example, the material transportation vehicle 100 in the material carrying device 200 delivers the material pallet 103 to an inlet of the drying device 301, and under the driving of the push-pull assembly 102, the material pallet 103 is moved from the second position 120 on the carrying base 101 to the drying station in the drying device 301. After the drying is completed, the material pallet 103 is moved out of the drying station by the push-pull assembly 102 again to the second position 120 on the carrying base 101, and is then transferred away.

In the technical solution of the embodiments of the present application, by arranging the drying device on the side of the conveying track of the material carrying device, automatic feeding and automatic discharging during drying operation can be achieved; thereby avoiding manual participation and improving the operating efficiency and the safety.

In some embodiments, as shown in FIG. 7, the drying device 301 is configured as a plurality of vacuum drying furnaces arranged on one side or two sides of the conveying track 201.

It can be understood that, as shown in FIG. 7, the plurality of vacuum drying furnaces may be arranged on the same side of the conveying track, or may be respectively located on two sides of the conveying track. In an example, the drying device 301 comprises a first vacuum drying furnace 302, a second vacuum drying furnace 303, and a third vacuum drying furnace 304. The first vacuum drying furnace 302 and the second vacuum drying furnace 303 are located on the same side of the conveying track 201, and the third vacuum drying furnace 304 is located on the other side of the conveying track 201.

In the technical solution of the embodiments of the present application, the provision of the plurality of vacuum drying furnaces can make full use of the efficient conveying capability of the material carrying device 200. The vacuum drying furnaces are arranged on two sides of the conveying track 201 and the material carrying device 200 can drive the material pallet 103 to the two sides, so that the station layout of the conveying system is facilitated, the compactness of the material drying system 300 is improved, the footprint is reduced, and the operating efficiency of the material drying process is improved, thereby improving the production efficiency and reducing the manufacturing cost.

In some embodiments, the material drying system 300 further comprises a loading device 305 and an unloading device 306. The loading device is located at one end of the conveying track 201 and is configured to place a material in a stacked manner 140 on the material pallet 103 in a loading position 310. The unloading device 306 is located at the other end of the conveying track 201, and is configured to take the material away from the material pallet 103 in an unloading position 340.

In an example, the loading device 305 and the unloading device 306 may be manipulators. The manipulator grabs a material, such as a battery cell, and places the material on the material pallet 103 in the loading position or removes the material from the material pallet 103 in the unloading position. The loading position 310 refers to a position where the material pallet 103 is prepared to be transferred to the material transportation vehicle 100, and the unloading position 340 refers to a position where the material pallet 103 is placed after being moved out of the material transportation vehicle 100.

In the technical solution of the embodiments of the present application, by providing the loading device 305 and the unloading device 306 respectively at two ends of the conveying track 201, the automatic operations of loading and unloading are achieved, forming a fully automated operation process, shortening the conversion time between different procedures, and improving the production efficiency.

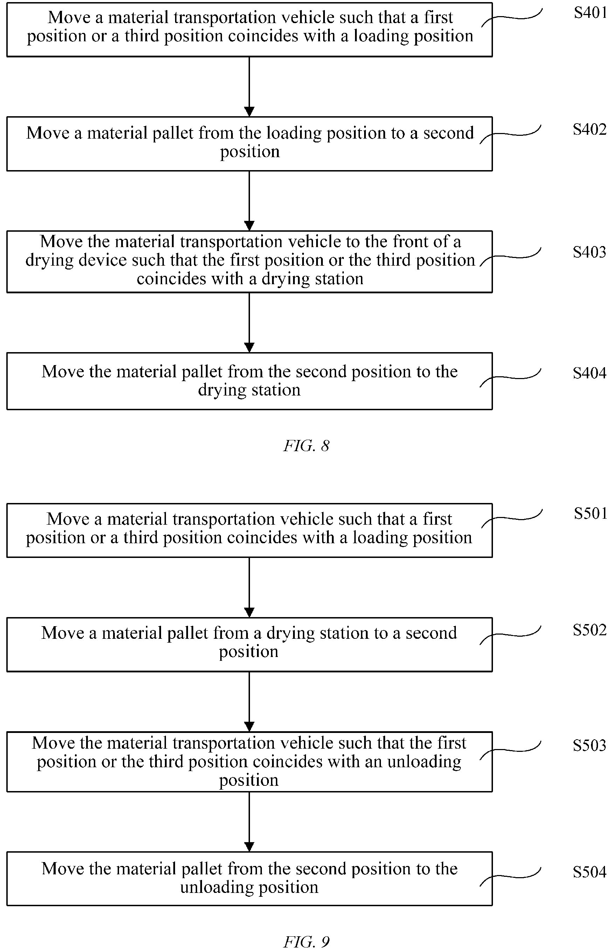

In a fourth aspect, an embodiment of the present application provides a method for controlling a material drying system. As shown in FIG. 8, the method for controlling a material drying system comprises:
step S401: moving a material transportation vehicle 100 such that a first position 110 or a third position 130 coincides with a loading position 310;
step S402: moving a material pallet 103 from the loading position 310 to a second position 120;
step S403: moving the material transportation vehicle 100 to the front of a drying device 301 such that the first position 110 or the third position 130 coincides with a drying station 320; and
step S404: moving the material pallet 103 from the second position 120 to the drying station 320.

In an example, the method for controlling a material drying system comprises delivering the material pallet from the loading position to the drying station in the drying device to perform a drying operation. As shown in FIG. 7, the material transportation vehicle 100 is moved to the front of the loading position 310, until the first position or the third position corresponding to the second position on the carrying base of the material transportation vehicle 100 in the first direction X coincides with the loading position 310, such that the push-pull assembly 102 can be detachably connected to the material pallet 103 to drive the material pallet 103 to move from the loading position 310 to the second position 120 on the carrying base 101 of the material transportation vehicle 100. The material transportation vehicle 100 is moved to the front of the inlet of the first vacuum drying furnace 302, until the first position 110 or the third position 130 corresponding to the material transportation vehicle coincides with the drying station 320 in the first vacuum drying furnace 302, such that the push-pull assembly 102 can move the material pallet 103 from the second position 120 on the carrying base 101 to the drying station 320 in the first vacuum drying furnace 302, completing the automatic delivery process of delivering the material from the loading position 310 to the drying station 320.

It can be understood that the relative positioning of the material transportation vehicle with respect to the loading position and the drying station can be achieved by providing a positioning structure or by sensor positioning, so as to ensure that the material pallet is moved to a predetermined position in a predetermined direction.

In the technical solution of the embodiment of the present application, the material is automatically moved from the loading position to the drying position by means of the material transportation vehicle, achieving the automatic processing of the feeding operation for drying, avoiding manual participation which causes excessive time consumption, and improving the production efficiency.

In some embodiments, as shown in FIG. 9, the method for controlling a material drying system further comprises:
step S501: moving the material transportation vehicle 100 to the front of the drying device 301 such that the first position 110 or the third position 130 coincides with the drying station;
step S502: moving the material pallet 103 from the drying station to the second position 120;
step S503: moving the material transportation vehicle 100 such that the first position 110 or the third position 130 coincides with an unloading position 340; and
step S504: moving the material pallet 103 from the second position 120 to the unloading position 340.

In an example, the method for controlling a material drying system further comprises a discharging process of moving the material pallet out from a drying position in the drying device and delivering the material pallet to the unloading position. As shown in FIG. 7, the material transportation vehicle 100 is moved to the front of the third vacuum drying furnace 304 in the drying device 301 until the first position 110 or the third position 130 corresponding to the carrying base 101 coincides with a second drying position 330. The push-pull assembly 102 drives the material pallet 103 to move from the second drying position 330 to the second position 120 on the carrying base 101, and then is delivered by the moving material transportation vehicle 100 to one end of the conveying track 202 to facilitate unloading of the material. Specifically, the material transportation vehicle 100 needs to move to the place where the first position 110 or the third position 130 coincides with the unloading position 340, and then the push-pull assembly 102 drives the material pallet 103 to move from the second position 120 to the unloading position 340. It can be understood that the material transportation vehicle 100 may be configured to drive the material pallet 103 to always move on the same side of the carrying base 101, that is, the loading position 310, the drying position and the unloading position 340 are all located on the same side of the material transportation vehicle. Alternatively, the material transportation vehicle may be configured to drive the material pallet to move along two sides of the first direction of the carrying base, that is, the loading position, the drying position and the unloading position may be arbitrarily distributed on the two sides of the carrying base.

In the technical solution of the embodiments of the present application, the automatic discharging process after drying is achieved by means of the material carrying device, improving the automation degree and transfer speed of material transfer, and improving the production efficiency.

In some embodiments, the engagement connection between the push-pull assembly 102 and the material pallet 103 is maintained in response to the material pallet 103 being in the second position 120.

In an example, as shown in FIGS. 3 and 4, the second push-pull assembly 105 in the push-pull assembly 102 is provided with two second engagement portions 1055. When the material pallet 103 is located in the second position on the carrying base 101, by maintaining the engagement relationship between the second engagement portions 1055 and the second engagement block group 1033 of the bottom portion of the material pallet 103, the push-pull assembly 102 can limit the material pallet 103 when the material transportation vehicle 100 moves with the material pallet 103, to ensure the stability during transportation. Since the movements of each push-pull rod and each engagement portion in the push-pull assembly 102 are independent, the first push-pull assembly 104 and the third push-pull assembly 106 in the push-pull assembly 102 may also maintain an engagement connection with their corresponding engagement blocks when the material pallet 103 is located in the second position on the carrying base 101.

In the technical solution of the embodiments of the present application, the engagement connection structure between the push-pull assembly and the material pallet can provide a good limiting effect when the material pallet is transported, preventing the material pallet from turning over, and ensuring the smooth and safe transportation.

In some embodiments, the positioning member on the carrying base is driven to abut against the material pallet or the material contained on the material pallet in response to the material pallet being in the second position.

In an example, as shown in FIG. 4, after the material pallet 103 is moved to the second position 120, the positioning member 107 may be driven to abut against the material pallet 103 or the material 140 in the extension direction of the conveying track. In this case, if the position of the material pallet deviates from the preset second position, the positioning member 107 cannot meet the preset abutment requirements, thereby sending an alarm signal to remind the operator to adjust the position of the material pallet.

In the technical solution of the embodiments of the present application, the positioning member can provide position determination and movement limit functions for the material pallet. Through position determination, it is possible to ensure that the material pallet does not shift or is adjusted in a timely manner after the shift occurs, avoiding apparatus failure caused by overturning during transportation. Moreover, during the transportation, the positioning member can provide contact abutment and limit in the extension direction of the conveying track. This, together with the limit of the push-pull assembly, can achieve limit in two directions in the horizontal plane, better ensuring the stability of transportation.

In a fifth aspect, an embodiment of the present application provides an electronic apparatus, comprising: at least one processor; and a memory communicatively connected to the at least one processor. The memory stores instructions executable by the at least one processor, and the instructions, when executed by the at least one processor, cause the at least one processor to perform a method for controlling a material drying system in the above embodiments.

In a sixth aspect, an embodiment of the present application provides a computer-readable storage medium, storing a computer program. When the computer program is executed by a processor, a method for controlling a material drying system in the above embodiments is implemented.

In a seventh aspect, an embodiment of the present application further provides a computer program product, comprising a computer program. When the computer program is executed by a processor, a method for controlling a material drying system in the above embodiments is implemented.

In an example, the material drying system 300 shown in FIGS. 2-7 comprises a material carrying device 200, a drying device 301, a loading device 305 and an unloading device 306.

The material carrying device comprises a conveying track 201, a material transportation vehicle 100 arranged on the conveying track 201, a driving device 202, and a material pallet 103 configured to contain a material. The conveying track 201 is arranged in a straight line, and the driving device 202 is arranged on the material transportation vehicle 100 to drive the material transportation vehicle 100 to move on the conveying track 201.

The drying device 301 comprises a first vacuum drying furnace 302 and a second vacuum drying furnace 303 located on one side of the conveying track 201, and a third vacuum drying furnace 304 located on the other side of the conveying track 201.

The loading device 305 is located at a first end of the conveying track 201, and the unloading device 306 is located at a second end of the conveying track 201.

The feeding process of the material drying system 300 is as follows.

The loading device 305 grabs a battery cell delivered by a feeding belt and places the battery cell in a stacked manner on the material pallet 103.

The driving device 202 drives the material transportation vehicle 100 to move to the first end of the conveying track 201 until the first position corresponding to the carrying base 101 of the material transportation vehicle 100 coincides with the loading position 310.

The first linear driving unit 1042 drives the first push-pull rod 1041 to move to the first position until the first engagement portion 1045 moves to the position where the first engagement block group 1032 is located. The first rotary driving unit 1043 drives the first push-pull rod 1041 to rotate, so as to engage the engagement groove on the first engagement portion 1045 with the first engagement block group 1032. The first linear driving unit 1042 drives the first push-pull rod 1041 to drive the material pallet 103 to move to the first transition position 111, and the first rotary driving unit 1043 drives the first push-pull rod 1041 to rotate to disengage the first engagement portion 1045 from the first engagement block group, thereby completing the first push-pull stage.

The second linear driving unit 1052 drives the second push-pull rod 1051 to move until the second engagement portion 1055 moves to the position where the second engagement block group 1033 is located, and the second rotary driving unit 1053 drives the second push-pull rod 1051 to rotate, so as to engage the second engagement portion 1055 with the second engagement block group 1033. The second linear driving unit 1052 drives the second push-pull rod 1051 to drive the material pallet 103 to move from the first transition position 111 to the second position 120, completing the second push-pull stage.

The positioning member 107 is driven to abut against the side of the material pallet 103, so as to provide limit and support for the material pallet 103 in the extension direction Y of the conveying track.

The driving device 202 drives the material transportation vehicle 100 to move along the conveying track 201 to the front of the first vacuum drying furnace 302, and the material transportation vehicle 100 moves along the conveying track 201 to maintain the engagement connection between the second engagement portion 1055 and the second engagement block group 1033. When the third position 130 coincides with the first drying position 320 in the first vacuum drying furnace 302, the material transportation vehicle 100 stops moving, and the positioning member 107 is separated from the material pallet 103 to cancel the limit.

The second linear driving unit 1052 drives the second push-pull rod 1051 to drive the material pallet 103 to move from the second position 120 to the second transition position 121, and the second rotary driving unit 1053 drives the second push-pull rod 1051 to rotate to disengage the second engagement portion 1055 from the second engagement block group 1033.

The third linear driving unit 1062 drives the third push-pull rod 1061 to move to the position where the third engagement portion 1065 corresponds to the third engagement block group 1034, the third rotary driving unit 1063 drives the third push-pull rod 1061 to rotate to engage the third engagement portion 1065 with the third engagement block group 1034, the third linear driving unit 1062 drives the third push-pull rod 1061 to drive the material pallet 103 to move from the second transition position 121 to the first drying position 320 in the first vacuum drying furnace 302, the third rotary driving unit 1063 drives the third push-pull rod 1061 to rotate to disengage the third engagement portion 1065 from the third engagement block group 1034, the third linear driving unit 1062 drives the third push-pull rod 1061 to return to the second position, and a furnace door of the first vacuum drying furnace 302 is closed, completing the feeding process of the material drying operation.

The discharging process of the material drying system 300 is as follows.

The driving device 202 moves the material transportation vehicle 100 to the front of the third vacuum drying furnace 304 until the first position 110 coincides with the second drying position 330 in the third vacuum drying furnace 304.

The push-pull assembly 102 drives the material pallet 103 to move from the second drying position 330 in the third vacuum drying furnace 304 to the second position 120, completing the movement of the material out of the third vacuum drying furnace 304. This process is substantially the same as the movement from the loading position 310 to the second position 120 in the feeding process. The positioning member 107 abuts against a side surface of the material pallet 103.

The engagement state of the second engagement portion 1055 and the second engagement block group 1033 is maintained, and the driving device 202 moves the material transportation vehicle 100 to the front of the unloading position 340 until the first position 110 coincides with the unloading position 340. The material transportation vehicle 100 stops moving, and the positioning member 107 releases the abutment against the material pallet 103.

The push-pull assembly 102 drives the material pallet 103 to move from the second position 120 to the unloading position 340. This process is substantially the same as the movement from the second position 120 to the first drying position 320 in the feeding process.

The unloading device 306 grabs the battery cell from the material pallet 103 in the unloading position 340 and transfers it to an unloading belt for removal, completing the entire discharging process.

## Claims

1. A material transportation vehicle (100), comprising:
a carrying base (101), and
a push-pull assembly (102) arranged on the carrying base (101),
wherein the push-pull assembly (102) is configured to drive a material pallet (103) to move between a first position (110) and a second position (120); and the second position (120) is a position above the carrying base (101), and the first position (110) is a position located in the same horizontal plane as the second position (120) and separated from the second position (120) by a preset distance in a first direction (X),
wherein the push-pull assembly (102) comprises:
a first push-pull assembly (104) configured to be detachably connected to the material pallet (103) and drive the material pallet (103) to move between the first position (110) and a first transition position (111); and
a second push-pull assembly (105) arranged spaced apart from the first push-pull assembly (104), the second push-pull assembly (105) being configured to be detachably connected to the material pallet (103) and drive the material pallet (103) to move between the second position (120) and the first transition position (111),
wherein the first transition position (111) is located between the first position (110) and the second position (120),
**characterized in that**,
the first push-pull assembly (104) comprises:
a first push-pull rod (1041), comprising a first rod body (1044) and a first engagement portion (1045) fixedly connected to the first rod body (1044);
a first linear driving unit (1042), which is in transmission connection with the first rod body (1044) to drive the first push-pull rod (1041) to move between the first position (110) and the first transition position (111); and
a first rotary driving unit (1043), which is in transmission connection with the first rod body (1044), the first rotary driving unit (1043) driving the first engagement portion (1045) to rotate, such that the first engagement portion (1045) engages with or disengages from the material pallet (103); and
the second push-pull assembly (105) comprises:
a second push-pull rod (1051), comprising a second rod body (1054) and at least one second engagement portion (1055) fixedly connected to the second rod body (1054);
a second linear driving unit (1052), which is in transmission connection with the second rod body (1054) to drive the second push-pull rod (1051) to move between the second position (120) and the first transition position (111); and
a second rotary driving unit (1053), which is in transmission connection with the second rod body (1054), the second rotary driving unit (1053) driving the at least one second engagement portion (1055) to rotate, such that the at least one second engagement portion (1055) engages with or disengages from the material pallet (103).

2. The material transportation vehicle (100) according to claim 1, wherein the push-pull assembly (102) is further configured to drive the material pallet (103) to move between the second position (120) and a third position (130);
wherein the third position (130) and the second position (120) are located in the same horizontal plane, and the third position (130) and the first position (110) are respectively located on two sides of the second position (120) in the first direction (X).

3. The material transportation vehicle (100) according to claim 2, wherein the push-pull assembly (102) further comprises:
a third push-pull assembly (102) arranged on the carrying base (101) and spaced apart from the first push-pull assembly (104) and the second push-pull assembly (105);
wherein the second push-pull assembly (105) is further configured to drive the material pallet (103) to move between the second position (120) and a second transition position (121);
wherein the third push-pull assembly (106) is further configured to drive the material pallet (103) to move between the second transition position (121) and the third position (130); and
the second transition position (121) is between the second position (120) and the third position (130).

4. The material transportation vehicle (100) according to claim 3, wherein the third push-pull assembly (106) comprises:
a third push-pull rod (1061), comprising a third rod body (1064) and a third engagement portion (1065) fixedly connected to the third rod body (1064);
a third linear driving unit (1062), which is in transmission connection with the third rod body (1064), the third linear driving unit (1062) being configured to drive the third push-pull rod (1061) to move between the third position (130) and the second transition position (121); and
a third rotary driving unit (1063), which is in transmission connection with the third rod body (1064), the third rotary driving unit (1063) being configured to drive the third engagement portion (1065) to rotate, such that the third engagement portion (1065) engages with or disengages from the material pallet (103);
or
wherein the first position (110) and the third position (130) are mirror symmetrical with respect to the second position (120), and the first transition position (111) and the second transition position (121) are mirror symmetrical with respect to the second position (120).

5. The material transportation vehicle (100) according to any one of claims 1-4, further comprising:
a positioning member (107) fixedly connected to the carrying base (101), and configured to abut against the material pallet (103) or a material (140) contained on the material pallet (103) in response to the material pallet (103) being in the second position (120).

6. A material carrying device (200), comprising:
a material pallet (103) configured to contain a material (140);
a conveying track (201); and
a material transportation vehicle (100) of any one of claims 1-5, wherein the material transportation vehicle (100) drives the material pallet (103) to move into or out of the carrying base (101) of the material transportation vehicle (100), and delivers the material pallet (103) along the conveying track (201).

7. The material carrying device (200) according to claim 6, wherein
an upper surface of the carrying base (101) is provided with at least one first guide member (150) extending in the first direction (X), and a bottom portion of the material pallet (103) is provided with at least one second guide member (160) corresponding to the at least one first guide member (150); and
the first direction (X) is perpendicular to an extension direction (Y) of the conveying track (201);
or
further comprising:
a driving device (202) configured to drive the material transportation vehicle (100) to move along the conveying track (201).

8. The material carrying device (200) according to any one of claims 6-7, wherein the bottom portion of the material pallet (103) is provided with an engagement block (1031), and the engagement block (1031) cooperates with the push-pull assembly (102) to achieve a detachable connection between the material pallet (103) and the material transportation vehicle (100).

9. A material drying system (300), comprising:
a material carrying device (200) of any one of claims 6-8; and
a drying device (301) located on a side of the conveying track (201) in the material carrying device (200);
wherein the material carrying device (200) is configured to move the material pallet (103) into or out of a drying station in the drying device (301).

10. The material drying system (300) according to claim 9, wherein the drying device (301) is configured as a plurality of vacuum drying furnaces arranged on one side or two sides of the conveying track (201);
and/or
further comprising:
a loading device (305) located at one end of the conveying track (201), the loading device (305) being configured to place a material (140) in a stacked manner on the material pallet (103) in a loading position (310); and
an unloading device (306) located at the other end of the conveying track (201), the unloading device (306) being configured to take the material (140) away from the material pallet (103) in an unloading position (340).

11. A method for controlling a material drying system (300) of any one of claims 9-10, the control method comprising:
moving the material transportation vehicle (100) such that the first position (110) or the third position (130) coincides with the loading position (310);
moving the material pallet (103) from the loading position (310) to the second position (120);
moving the material transportation vehicle (100) to the front of the drying device (301) such that the first position (110) or the third position (130) coincides with the drying station; and
moving the material pallet (103) from the second position (120) to the drying station.

12. The control method according to claim 11, further comprising:
moving the material transportation vehicle (100) to the front of the drying device (301) such that the first position (110) or the third position (130) coincides with the drying station; and
moving the material pallet (103) from the drying station to the second position (120);
moving the material transportation vehicle (100) such that the first position (110) or the third position (130) coincides with the unloading position (340); and
moving the material pallet (103) from the second position (120) to the unloading position (340);
and/or
wherein maintaining the engagement connection between the push-pull assembly (102) and the material pallet (103) in response to the material pallet (103) being in the second position (120),
or
wherein driving the positioning member (107) on the carrying base (101) to abut against the material pallet (103) or the material (140) contained on the material pallet (103) in response to the material pallet (103) being in the second position (120).

## Patentansprüche

1. Materialtransportfahrzeug (100), das Folgendes umfasst:
eine Tragebasis (101), und
eine Schub-Zug-Anordnung (102), die an der Tragebasis (101) angeordnet ist,
wobei die Schub-Zug-Anordnung (102) ausgelegt ist zum Antreiben einer Materialpalette (103), um sich zwischen einer ersten Position (110) und einer zweiten Position (120) zu bewegen; und
wobei die zweite Position (120) eine Position über der Tragebasis (101) ist und die erste Position (110) eine Position ist, die sich in der gleichen horizontalen Ebene wie die zweite Position (120) befindet und von der zweiten Position (120) um einen voreingestellten Abstand in einer ersten Richtung (X) getrennt ist,
wobei die Schub-Zug-Anordnung (102) Folgendes umfasst:
eine erste Schub-Zug-Anordnung (104), dazu ausgelegt, lösbar mit der Materialpalette (103) verbunden zu sein und die Materialpalette (103) anzutreiben, um sich zwischen der ersten Position (110) und einer ersten Übergangsposition (111) zu bewegen; und
eine zweite Schub-Zug-Anordnung (105), die von der ersten Schub-Zug-Anordnung (104) beabstandet angeordnet ist, wobei die zweite Schub-Zug-Anordnung (105) dazu ausgelegt ist, lösbar mit der Materialpalette (103) verbunden zu sein und die Materialpalette (103) anzutreiben, um sich zwischen der zweiten Position (120) und der ersten Übergangsposition (111) zu bewegen, wobei sich die erste Übergangsposition (111) zwischen der ersten Position (110) und der zweiten Position (120) befindet,
**dadurch gekennzeichnet, dass**
die erste Schub-Zug-Anordnung (104) Folgendes umfasst:
eine erste Schub-Zug-Stange (1041), umfassend einen ersten Stangenkörper (1044) und einen ersten Eingriffsabschnitt (1045), der fest mit dem ersten Stangenkörper (1044) verbunden ist;
eine erste lineare Antriebseinheit (1042), die in Übertragungsverbindung mit dem ersten Stangenkörper (1044) ist, um die erste Schub-Zug-Stange (1041) anzutreiben, um sich zwischen der ersten Position (110) und der ersten Übergangsposition (111) zu bewegen; und
eine erste rotatorische Antriebseinheit (1043), die in Übertragungsverbindung mit dem ersten Stangenkörper (1044) ist, wobei die erste rotatorische Antriebseinheit (1043) den ersten Eingriffsabschnitt (1045) antreibt, um zu rotieren, sodass der erste Eingriffsabschnitt (1045) in Eingriff mit der Materialpalette (103) kommt oder von dieser gelöst wird; und
wobei die zweite Schub-Zug-Anordnung (105) Folgendes umfasst:
eine zweite Schub-Zug-Stange (1051), umfassend einen zweiten Stangenkörper (1054) und zumindest einen zweiten Eingriffsabschnitt (1055), der fest mit dem zweiten Stangenkörper (1054) verbunden ist;
eine zweite lineare Antriebseinheit (1052), die in Übertragungsverbindung mit dem zweiten Stangenkörper (1054) ist, um die zweite Schub-Zug-Stange (1051) anzutreiben, um sich zwischen der zweiten Position (120) und der ersten Übergangsposition (111) zu bewegen; und
eine zweite rotatorische Antriebseinheit (1053), die in Übertragungsverbindung mit dem zweiten Stangenkörper (1054) ist, wobei die zweite rotatorische Antriebseinheit (1053) den zumindest einen zweiten Eingriffsabschnitt (1055) antreibt, um zu rotieren, sodass der zumindest eine zweite Eingriffsabschnitt (1055) in Eingriff mit der Materialpalette (103) kommt oder von dieser gelöst wird.

2. Materialtransportfahrzeug (100) nach Anspruch 1, wobei die Schub-Zug-Anordnung (102) ferner ausgelegt ist zum Antreiben der Materialpalette (103), um sich zwischen der zweiten Position (120) und einer dritten Position (130) zu bewegen;
wobei sich die dritte Position (130) und die zweite Position (120) in der gleichen horizontalen Ebene befinden und sich die dritte Position (130) und die erste Position (110) jeweils auf zwei Seiten der zweiten Position (120) in der ersten Richtung (X) befinden.

3. Materialtransportfahrzeug (100) nach Anspruch 2, wobei die Schub-Zug-Anordnung (102) ferner Folgendes umfasst:
eine dritte Schub-Zug-Anordnung (102), angeordnet an der Tragebasis (101) und beabstandet von der ersten Schub-Zug-Anordnung (104) und der zweiten Schub-Zug-Anordnung (105);
wobei die zweite Schub-Zug-Anordnung (105) ferner ausgelegt ist zum Antreiben der Materialpalette (103), um sich zwischen der zweiten Position (120) und einer zweiten Übergangsposition (121) zu bewegen;
wobei die dritte Schub-Zug-Anordnung (106) ferner ausgelegt ist zum Antreiben der Materialpalette (103), um sich zwischen der zweiten Übergangsposition (121) und der dritten Position (130) zu bewegen; und
wobei sich die zweite Übergangsposition (121) zwischen der zweiten Position (120) und der dritten Position (130) befindet.

4. Materialtransportfahrzeug (100) nach Anspruch 3, wobei die dritte Schub-Zug-Anordnung (106) Folgendes umfasst:
eine dritte Schub-Zug-Stange (1061), umfassend einen dritten Stangenkörper (1064) und einen dritten Eingriffsabschnitt (1065), der fest mit dem dritten Stangenkörper (1064) verbunden ist;
eine dritte lineare Antriebseinheit (1062), die in Übertragungsverbindung mit dem dritten Stangenkörper (1064) ist, wobei die dritte lineare Antriebseinheit (1062) ausgelegt ist zum Antreiben der dritten Schub-Zug-Stange (1061), um sich zwischen der dritten Position (130) und der zweiten Übergangsposition (121) zu bewegen; und
eine dritte rotatorische Antriebseinheit (1063), die in Übertragungsverbindung mit dem dritten Stangenkörper (1064) ist, wobei die dritte rotatorische Antriebseinheit (1063) dazu ausgelegt ist, den dritten Eingriffsabschnitt (1065) anzutreiben, um zu rotieren, sodass der dritte Eingriffsabschnitt (1065) in Eingriff mit der Materialpalette (103) kommt oder von dieser gelöst wird;
oder
wobei die erste Position (110) und die dritte Position (130) spiegelsymmetrisch bezüglich der zweiten Position (120) sind und die erste Übergangsposition (111) und die zweite Übergangsposition (121) spiegelsymmetrisch bezüglich der zweiten Position (120) sind.

5. Materialtransportfahrzeug (100) nach einem der Ansprüche 1-4, das ferner Folgendes umfasst:
ein Positionierungselement (107), das fest mit der Tragebasis (101) verbunden und dazu ausgelegt ist, in Reaktion darauf, dass die Materialpalette (103) in der zweiten Position (120) ist, an der Materialpalette (103) oder einem auf der Materialpalette (103) enthaltenen Material (140) anzuliegen.

6. Materialtragevorrichtung (200), die Folgendes umfasst:
eine Materialpalette (103), dazu ausgelegt, ein Material (140) zu enthalten;
eine Förderbahn (201); und
ein Materialtransportfahrzeug (100) nach einem der Ansprüche 1-5, wobei das Materialtransportfahrzeug (100) die Materialpalette (103) antreibt, um sich in die oder aus der Tragebasis (101) des Materialtransportfahrzeugs (100) zu bewegen, und die Materialpalette (103) entlang der Förderbahn (201) zuführt.

7. Materialtragevorrichtung (200) nach Anspruch 6, wobei
eine obere Oberfläche der Tragebasis (101) mit zumindest einem ersten Führungselement (150) versehen ist, das sich in der ersten Richtung (X) erstreckt, und wobei ein unterer Abschnitt der Materialpalette (103) mit zumindest einem zweiten Führungselement (160) versehen ist, das dem zumindest einen ersten Führungselement (150) entspricht; und
die erste Richtung (X) senkrecht zu einer Erstreckungsrichtung (Y) der Förderbahn (201) ist; oder
ferner umfassend:
eine Antriebsvorrichtung (202), ausgelegt zum Antreiben des Materialtransportfahrzeugs (100), um sich entlang der Förderbahn (201) zu bewegen.

8. Materialtragevorrichtung (200) nach einem der Ansprüche 6-7, wobei der untere Abschnitt der Materialpalette (103) mit einem Eingriffsblock (1031) versehen ist und der Eingriffsblock (1031) mit der Schub-Zug-Anordnung (102) zusammenwirkt, um eine lösbare Verbindung zwischen der Materialpalette (103) und dem Materialtransportfahrzeug (100) zu erreichen.

9. Materialtrocknungssystem (300), das Folgendes umfasst:
eine Materialtragevorrichtung (200) nach einem der Ansprüche 6-8; und
eine Trocknungsvorrichtung (301), befindlich auf einer Seite der Förderbahn (201) in der Materialtragevorrichtung (200);
wobei die Materialtragevorrichtung (200) dazu ausgelegt ist, die Materialpalette (103) in eine oder aus einer Trocknungsstation in der Trocknungsvorrichtung (301) zu bewegen.

10. Materialtrocknungssystem (300) nach Anspruch 9, wobei die Trocknungsvorrichtung (301) als mehrere Unterdrucktrocknungsöfen ausgelegt ist, die auf einer Seite oder zwei Seiten der Förderbahn (201) angeordnet sind;
und/oder
ferner Folgendes umfassend:
eine Ladevorrichtung (305), die sich an einem Ende der Förderbahn (201) befindet, wobei die Ladevorrichtung (305) dazu ausgelegt ist, ein Material (140) in einer gestapelten Weise auf der Materialpalette (103) in einer Ladeposition (310) zu platzieren; und
eine Entladevorrichtung (306), die sich an dem anderen Ende der Förderbahn (201) befindet, wobei die Entladevorrichtung (306) dazu ausgelegt ist, das Material (140) von der Materialpalette (103) in einer Entladeposition (340) wegzunehmen.

11. Verfahren zur Steuerung eines Materialtrocknungssystems (300) nach einem der Ansprüche 9-10, wobei das Steuerungsverfahren Folgendes umfasst:
Bewegen des Materialtransportfahrzeugs (100), sodass die erste Position (110) oder die dritte Position (130) mit der Ladeposition (310) zusammenfällt;
Bewegen der Materialpalette (103) von der Ladeposition (310) in die zweite Position (120);
Bewegen des Materialtransportfahrzeugs (100) zur Vorderseite der Trocknungsvorrichtung (301), sodass die erste Position (110) oder die dritte Position (130) mit der Trocknungsstation zusammenfällt; und
Bewegen der Materialpalette (103) von der zweiten Position (120) zur Trocknungsstation.

12. Steuerungsverfahren nach Anspruch 11, das ferner Folgendes umfasst:
Bewegen des Materialtransportfahrzeugs (100) zur Vorderseite der Trocknungsvorrichtung (301), sodass die erste Position (110) oder die dritte Position (130) mit der Trocknungsstation zusammenfällt; und
Bewegen der Materialpalette (103) von der Trocknungsstation in die zweite Position (120);
Bewegen des Materialtransportfahrzeugs (100), sodass die erste Position (110) oder die dritte Position (130) mit der Entladeposition (340) zusammenfällt; und
Bewegen der Materialpalette (103) von der zweiten Position (120) in die Entladeposition (340); und/oder
wobei die Eingriffsverbindung zwischen der Schub-Zug-Anordnung (102) und der Materialpalette (103) aufrechterhalten wird in Reaktion darauf, dass die Materialpalette (103) in der zweiten Position (120) ist,
oder
wobei das Positionierungselement (107) auf der Tragebasis (101) angetrieben wird, um an der Materialpalette (103) oder dem auf der Materialpalette (103) enthaltenen Material (140) anzuliegen, in Reaktion darauf, dass die Materialpalette (103) in der zweiten Position (120) ist.

## Revendications

1. Véhicule de transport de matériau (100), comprenant :
une base de transport (101), et
un ensemble de poussée-traction (102) disposé sur la base de transport (101),
l'ensemble de poussée-traction (102) étant conçu pour entraîner une palette de matériaux (103) afin qu'elle se déplace entre une première position (110) et une deuxième position (120) ; et la deuxième position (120) étant une position au-dessus de la base de transport (101), et la première position (110) étant une position située dans le même plan horizontal que la deuxième position (120) et séparée de la deuxième position (120) par une distance prédéfinie dans une première direction (X),
l'ensemble de poussée-traction (102) comprenant :
un premier ensemble de poussée-traction (104) conçu pour être relié amovible à la palette de matériaux (103) et pour entraîner la palette de matériaux (103) afin qu'elle se déplace entre la première position (110) et une première position de transition (111) ; et
un deuxième ensemble de poussée-traction (105) disposé à distance du premier ensemble de poussée-traction (104), le deuxième ensemble de poussée-traction (105) étant conçu pour être relié amovible à la palette de matériaux (103) et pour entraîner la palette de matériaux (103) afin qu'elle se déplace entre la deuxième position (120) et la première position de transition (111),
la première position de transition (111) étant située entre la première position (110) et la deuxième position (120),
**caractérisé en ce que**,
le premier ensemble de poussée-traction (104) comprend :
une première tige de poussée-traction (1041), comprenant un premier corps de tige (1044) et une première partie de mise en prise (1045) reliée à demeure au premier corps de tige (1044) ;
une première unité d'entraînement linéaire (1042), qui est en liaison de transmission avec le premier corps de tige (1044) pour entraîner la première tige de poussée-traction (1041) afin qu'elle se déplace entre la première position (110) et la première position de transition (111) ; et
une première unité d'entraînement rotative (1043), qui est en liaison de transmission avec le premier corps de tige (1044), la première unité d'entraînement rotative (1043) entraînant la rotation de la première partie de mise en prise (1045), de sorte que la première partie de mise en prise (1045) vienne en prise avec la palette de matériaux (103) ou s'en sépare ; et
le deuxième ensemble de poussée-traction (105) comprend :
une deuxième tige de poussée-traction (1051), comprenant un deuxième corps de tige (1054) et au moins une deuxième partie de mise en prise (1055) reliée à demeure au deuxième corps de tige (1054) ;
une deuxième unité d'entraînement linéaire (1052), qui est en liaison de transmission avec le deuxième corps de tige (1054) pour entraîner la deuxième tige de poussée-traction (1051) afin qu'elle se déplace entre la deuxième position (120) et la première position de transition (111) ; et
une deuxième unité d'entraînement rotative (1053), qui est en liaison de transmission avec le deuxième corps de tige (1054), la deuxième unité d'entraînement rotative (1053) entraînant la rotation de l'au moins une deuxième partie de mise en prise (1055), de sorte que l'au moins une deuxième partie de mise en prise (1055) vienne en prise avec la palette de matériaux (103) ou s'en sépare.

2. Véhicule de transport de matériau (100) selon la revendication 1, l'ensemble de poussée-traction (102) étant en outre conçu pour entraîner la palette de matériaux (103) afin qu'elle se déplace entre la deuxième position (120) et une troisième position (130) ;
la troisième position (130) et la deuxième position (120) étant situées dans le même plan horizontal, et la troisième position (130) et la première position (110) étant respectivement situées de part et d'autre de la deuxième position (120) dans la première direction (X).

3. Véhicule de transport de matériau (100) selon la revendication 2, l'ensemble de poussée-traction (102) comprenant en outre :
un troisième ensemble de poussée-traction (102) disposé sur la base de transport (101) et espacé du premier ensemble de poussée-traction (104) et du deuxième ensemble de poussée-traction (105) ;
le deuxième ensemble de poussée-traction (105) étant en outre conçu pour entraîner la palette de matériaux (103) afin qu'elle se déplace entre la deuxième position (120) et une deuxième position de transition (121) ;
le troisième ensemble de poussée-traction (106) étant en outre conçu pour entraîner la palette de matériaux (103) afin qu'elle se déplace entre la deuxième position de transition (121) et la troisième position (130) ; et
la deuxième position de transition (121) se situant entre la deuxième position (120) et la troisième position (130).

4. Véhicule de transport de matériau (100) selon la revendication 3, le troisième ensemble de poussée-traction (106) comprenant :
une troisième tige de poussée-traction (1061), comprenant un troisième corps de tige (1064) et une troisième partie de mise en prise (1065) reliée à demeure au troisième corps de tige (1064) ;
une troisième unité d'entraînement linéaire (1062), qui est en liaison de transmission avec le troisième corps de tige (1064), la troisième unité d'entraînement linéaire (1062) étant conçue pour entraîner la troisième tige de poussée-traction (1061) afin qu'elle se déplace entre la troisième position (130) et la deuxième position de transition (121) ; et
une troisième unité d'entraînement rotative (1063), qui est en liaison de transmission avec le troisième corps de tige (1064), la troisième unité d'entraînement rotative (1063) étant conçue pour entraîner la rotation de la troisième partie de mise en prise (1065), de sorte que la troisième partie de mise en prise (1065) vienne en prise avec la palette de matériaux (103) ou s'en sépare ;
ou
la première position (110) et la troisième position (130) étant symétriques par rapport à la deuxième position (120), et la première position de transition (111) et la deuxième position de transition (121) étant symétriques par rapport à la deuxième position (120).

5. Dispositif de transport de matériau (100) selon l'une quelconque des revendications 1 à 4, comprenant en outre :
un élément de positionnement (107) relié à demeure à la base de transport (101) et conçu pour venir en butée contre la palette de matériaux (103) ou un matériau (140) contenu sur la palette de matériaux (103) lorsque la palette de matériaux (103) se trouve dans la deuxième position (120).

6. Dispositif de transport de matériau (200), comprenant :
une palette de matériaux (103) conçue pour contenir un matériau (140) ;
une piste de transport (201) ; et
un véhicule de transport de matériau (100) selon l'une quelconque des revendications 1 à 5, le véhicule de transport de matériau (100) entraînant la palette de matériaux (103) pour qu'elle entre ou sorte de la base de transport (101) du véhicule de transport de matériau (100), et achemine la palette de matériaux (103) le long de la piste de transport (201).

7. Dispositif de transport de matériau (200) selon la revendication 6,
une surface supérieure de la base de transport (101) étant pourvue d'au moins un premier élément de guidage (150) s'étendant dans la première direction (X), et une partie inférieure de la palette de matériaux (103) étant pourvue d'au moins un second élément de guidage (160) correspondant à l'au moins un premier élément de guidage (150) ; et
la première direction (X) étant perpendiculaire à une direction d'extension (Y) de la piste de transport (201) ;
ou
comprenant en outre :
un dispositif d'entraînement (202) conçu pour entraîner le véhicule de transport de matériau (100) afin qu'il se déplace le long de la piste de transport (201).

8. Dispositif de transport de matériau (200) selon l'une quelconque des revendications 6 et 7, la partie inférieure de la palette de matériaux (103) étant pourvue d'un bloc de mise en prise (1031), et le bloc de mise en prise (1031) coopérant avec l'ensemble de poussée-traction (102) pour réaliser une liaison amovible entre la palette de matériaux (103) et le véhicule de transport de matériau (100).

9. Système de séchage de matériau (300), comprenant :
un dispositif de transport de matériau (200) selon l'une quelconque des revendications 6 à 8 ; et
un dispositif de séchage (301) situé sur un côté de la piste de transport (201) dans le dispositif de transport de matériau (200) ;
le dispositif de transport de matériau (200) étant conçu pour déplacer la palette de matériaux (103) afin qu'elle entre ou sorte d'une station de séchage dans le dispositif de séchage (301).

10. Système de séchage de matériau (300) selon la revendication 9, le dispositif de séchage (301) étant conçu comme une pluralité de fours de séchage sous vide disposés d'un côté ou de deux côtés de la piste de transport (201) ;
et/ou
comprenant en outre :
un dispositif de chargement (305) situé au niveau d'une extrémité de la piste de transport (201), le dispositif de chargement (305) étant conçu pour placer un matériau (140) de manière empilée sur la palette de matériaux (103) dans une position de chargement (310) ; et
un dispositif de déchargement (306) situé au niveau de l'autre extrémité de la piste de transport (201), le dispositif de déchargement (306) étant conçu pour retirer le matériau (140) de la palette de matériaux (103) dans une position de déchargement (340).

11. Procédé de commande d'un système de séchage de matériau (300) selon l'une quelconque des revendications 9 à 10, le procédé de commande comprenant les étapes consistant à :
déplacer le véhicule de transport de matériau (100) de sorte que la première position (110) ou la troisième position (130) coïncide avec la position de chargement (310) ;
déplacer la palette de matériaux (103) de la position de chargement (310) à la deuxième position (120) ;
déplacer le véhicule de transport de matériau (100) à l'avant du dispositif de séchage (301) de sorte que la première position (110) ou la troisième position (130) coïncide avec la station de séchage ; et
déplacer la palette de matériaux (103) de la deuxième position (120) vers la station de séchage.

12. Procédé de commande selon la revendication 11, comprenant en outre les étapes consistant à:
déplacer le véhicule de transport de matériau (100) à l'avant du dispositif de séchage (301) de sorte que la première position (110) ou la troisième position (130) coïncide avec la station de séchage ; et
déplacer la palette de matériaux (103) de la station de séchage à la deuxième position (120) ;
déplacer le véhicule de transport de matériau (100) de sorte que la première position (110) ou la troisième position (130) coïncide avec la position de déchargement (340) ; et
déplacer la palette de matériaux (103) de la deuxième position (120) à la position de déchargement (340) ;
et/ou
maintenir la liaison de mise en prise entre l'ensemble de poussée-traction (102) et la palette de matériaux (103) lorsque la palette de matériaux (103) se trouve dans la deuxième position (120), ou
entraîner l'élément de positionnement (107) sur la base de transport (101) afin qu'il vienne en butée contre la palette de matériaux (103) ou le matériau (140) contenu sur la palette de matériaux (103) lorsque la palette de matériaux (103) se trouve dans la deuxième position (120).
